# EUROPEAN PATENT APPLICATION

(11) **EP 2 263 977 A1**
(43) Date of publication of application: **22.12.2010**
(21) Application number: 09718518.5
(22) Date of filing: 06.03.2009
(51) Int. Cl.: C01G 1/12, C01G 3/12, C01G 15/00

(54) **COPPER INDIUM SULFIDE NANOPARTICLES AND A PREPARATION METHOD THEREOF**

(30) Priority: 06.03.2008 CN 200810101428
(71) Applicant: Bayer Technology Services GmbH, 51368 Leverkusen (DE)
(72) Inventor: ZHONG, Haizheng, Beijing 100080 (CN); LI, Yongfang, Beijing 100080 (CN)
(86) International application number: PCT/CN2009/000237
(87) International publication number: WO 2009/109110

(57) **Abstract**

Related are a copper indium sulfide nanoparticles and a preparation method thereof. Copper salts, indium salts and alkane thiol are added to a non-polar organic solvent, and then are heated with stirring under inert gas atmosphere to dissolve until a dark red colloidal solution is obtained. The obtained colloidal solution is cooled to room temperature, and then a polar solvent is added. The copper indium sulfide semiconductor nanoparticles are obtained through centrifugal settling. The obtained copper indium sulfide semiconductor nanoparticles could be further washed and vacuum dried to give copper indium sulfide semiconductor nanoparticle powders. The obtained copper indium sulfide semiconductor nanoparticles have an average particle size of 2 to 10 nm and an emission spectrum of 600 to 800 nm in the near infrared region, quantum efficiency being close to 10%. The yield of the present method is up to 90%.

## Description

### TECHNICAL FIELD

The present invention relates to copper indium sulfide semiconducting nanoparticles and process for preparing the same.

### BACKGROUND ART

With the development of nanotechnology, nano-material science has become an indispensable important field in the current material science development. The progress of nano-material research is bound to push physics, chemistry, biology and many other disciplines to a new level, and at the same time, will also bring new opportunities in technological research in the 21 st century. With a growing urgency in energy issues, solar cells as a renewable, clean energy has attracted worldwide attention. Applying nano-material and technology to the solar cells might greatly increase the conversion efficiency of the current solar cells, lower the production cost of the solar cells, and promote the development of new types of solar cells. Under such circumstances, the development of nano-material to be used in solar cells is becoming a new challenge.

CuInS₂ is a type of I-III-VI₂ semiconducting compound material, which has a structure of chalcopyrite, a bandgap of 1.50eV, and a relatively large absorption coefficient, and in addition, because CuInS₂ does not contain any toxic component, it is a perfect material for solar cells. CuInS₂-based thin-film solar cells have reached a conversion efficiency of 14.4%. At present, the major processes for preparing such solar cells are chemical vapor deposition, magnetron sputtering technology, and electrochemical deposition, etc. However, these processes require relatively more critical conditions, have complicated preparation methods, and have a relatively high cost.

A process of first synthesizing CuInS₂ nanoparticles, afterwards forming film with spin coating, followed by sintering is a good solution to industrialize CuInS₂ solar cells. In addition, the radius of the exciton of CuInS₂ semiconductor is 4.1 nm, which was calculated theoretically; therefore, as expected a very strong quantum confinement effect will be illustrated when the size of CuInS₂ semiconducting nanoparticles corresponds to the exciton radius. These characteristics make CuInS₂ semiconducting nanoparticles potentially applicable in the fields of polymer solar cells, dye-sensitized solar cells, bio-markers, and chemical detections.

However, since the synthesis preparation of CuInS₂ ternary semiconducting nanoparticles is relatively difficult, there are only a few reports at present. For example, S. L. Castro et al. of the U.S.A. obtained CuInS₂ semiconducting nanoparticles with a particle size of 2-4nm by first preparing (PPh₃)₂CuIn(SEt)₄ precursors and then cracking the precursors in hexadecyl mercaptan (Castro, S. L. et al. J. Phys. Chem. B 2004, 108, 12429). Nairn et al. of the U.S.A. also obtained CuInS₂ semiconducting nanoparticles with a particle size of around 2nm by photolysis of similar precursors with ultra-violet light (Nairn, J. J. et al. Nano Lett. 2006, 6, 1218). Du Wenmin et al. used a hydrothermal technique to prepare CuInS₂ semiconducting nanoparticles with a particle size of 13-17nm (Du et al. Chem. Eur. J. 2007, 13, 8840, 8846). However, there are several defects in the existing preparation methods: (1) the synthesis steps are complicated, and most of them require prior synthesis of precursors, which is not suitable for large-scale preparation; (2) some of the reactants used in the synthesis include toxic substances; and (3) the synthesized nanoparticles have relatively poor performance, and the particle sizes and optical properties are not adjustable.

### CONTENT OF THE INVENTION

The object of the present invention is to provide copper indium sulfide semiconducting nanoparticles and a process for preparing such copper indium sulfide semiconducting nanoparticles.

The process for preparing copper indium sulfide semiconducting nanoparticles of the present invention comprises the following steps:
(a) adding copper salt, indium salt, and alkanethiols into a non-polar organic solvent, then under an inert gas, heating and stirring, and dissolving until a dark red colloidal solution is obtained ; and
(b) cooling the colloidal solution obtained in step (a) down to room temperature, adding a polar solvent, and then carrying out centrifugal sedimentation to obtain copper indium sulfide semiconducting nanoparticles; optionally further cleaning and vacuum drying to obtain copper indium sulfide semiconducting nanoparticle powder.

Said copper indium sulfide semiconducting nanoparticles are in a tetragonal crystal form, with a particle size of 2-10nm and an emission spectrum in the near-infrared region of 600∼800nm.

### DESCRIPTION OF THE DRAWINGS

Figure 1 shows an absorption spectrum and a fluorescence spectrum of the CuInS₂ nanoparticles in Embodiment 1 of the present invention obtained at a temperature of 240°C with different reaction times; wherein Figure 1a shows the absorption spectrum and Figure 1b shows the fluorescence spectrum.
Figure 2 shows transmission electron microscope images of the CuInS₂ nanoparticles prepared in Embodiment 1 of the present invention; wherein Figure 2a shows a transmission electron microscope image of the CuInS₂ nanoparticles prepared at a temperature of 240°C with a reaction time of 2 hours, and Figure 2b shows a transmission electron microscope image of the CuInS₂ nanoparticles prepared at a temperature of 240°C with a reaction time of 4 hours.
Figure 3 shows an X-ray diffraction curve of the CuInS₂ nanoparticle powder prepared in Embodiment 1 of the present invention at a temperature of 240°C with reaction time of 2 hours.

### DESCRIPTION OF THE EMBODIMENTS

In the present invention, the process for preparing copper indium sulfide semiconducting nanoparticles adopts low-cost copper salts, indium salts, and alkanethiols as raw materials, and through a simple solution reaction and pyrolysis heating method prepares ternary semiconducting copper indium sulfide (CuInS₂) nanoparticles with controllable particle sizes. The process has the advantages of being simple to prepare, low-cost, non-toxic, capable of large-scale preparation, and easy to control, etc.

The process for preparing copper indium sulfide semiconducting nanoparticles of the present invention comprises the following steps:
(a) adding copper salt, indium salt, and alkanethiols into a non-polar organic solvent, then under an inert gas, heating and stirring, and dissolving until a dark red colloidal solution is obtained; and
(b) cooling the colloidal solution obtained in step (a) down to room temperature, adding a polar solvent, and then carrying out centrifugal sedimentation to obtain copper indium sulfide semiconducting nanoparticles; optionally further cleaning and vacuum drying to obtain copper indium sulfide semiconducting nanoparticle powder.

The product yield of the preparation process provided in this present invention is up to 90%.

The copper indium sulfide semiconducting nanoparticles are in a tetragonal crystal form, with a particle size of 2-10nm and an emission spectrum in the near-infrared region of 600∼800nm.

Preferably, the copper indium sulfide semiconducting nanoparticles in the present invention are in the shape of a sphere, a triangle, flake-like and/or rod-like, etc.

Said copper salt and indium salt in step (a) of the process of the present invention preferably have a molar ratio of 1-2:1-2, and the molar content of the alkanethiols is preferably in excess of the molar content of the copper salt or the indium salt, and preferably the molar ratio is 100-1.5:1, more preferably 50-2:1, and particularly preferably 12-3:1.

The temperature for said heating and stirring in step (a) is preferably between 100°C and 350°C, more preferably between 200°C and 300°C, and particularly preferably between 240°C and 270°C, and the time period is preferably between 10 minutes and 30 hours, more preferably between 20 minutes and 6 hours, and particularly preferably between 1 hour and 2 hours.

Said cleaning is preferably carried out by dispersing the copper indium sulfide semiconducting nanoparticles obtained in a solvent of hexane, chloroform or toluene, followed by adding methanol and proceeding with centrifugal sedimentation, and the cleaning process is optionally repeated until the desired copper indium sulfide semiconducting nanoparticles are obtained.

Said copper salt can be copper (I) acetate, copper (II) acetate, copper (II) chloride, copper (I) chloride, copper (II) sulfate, or any mixture thereof.

Said indium salt can be indium acetate, indium chloride, indium sulfate, indium nitrate, or any mixture thereof.

Said alkanethiols can be mercaptans having one or more sulfhydryl functional groups, or a mixture of the mercaptans having one or more sulfhydryl functional groups.

Said mercaptan having one sulfhydryl functional group is preferably octyl mercaptan, iso-octyl-mercaptan, dodecyl mercaptan, hexadecanethiol or octadecanethiol, etc.

Said mercaptans having more than one sulfhydryl functional group are preferably 1,8-dioctyl mercaptans or 1,6-dioctyl mercaptans, etc.

Said non-polar organic solvent is preferably octadecene, paraffin wax, diphenyl ether, dioctyl ether, octadecane, or any solvent mixture thereof, etc.

Said polar solvent is preferably methanol, ethanol, isopropanol, acetone, or any solvent mixture thereof, etc.

Said inert gas is preferably argon or nitrogen, etc.

The copper indium sulfide semiconducting nanoparticles obtained with the process preparation in the present invention can be applied in the fields of bio-labeling, light-emitting diodes, thin-film solar cells, polymer solar cells, etc.

In comparison with the existing technology, the present invention has the following advantages:
1. The present invention requires no prior preparation with precursors containing toxic materials, but carries out the reaction with low-cost copper salts, indium salts, and alkanethiols, and the preparation process is simple, easy to control, and easy to implement in large-scale production.
2. In the present invention, only the reaction time and temperature are required to be controlled to obtain ternary semiconducting copper indium sulfide (CuInS₂) nanoparticles in different absorption wavelength ranges.
3. The fluorescence quantum efficiency of ternary semiconducting copper indium sulfide (CuInS₂) nanoparticles provided by the present invention is close to 10%, and their emission spectrum is in the near-infrared region. Through exchange of ligands, these nanoparticles can be dissolved into an aqueous phase.
4. The ternary semiconducting copper indium sulfide (CuInS₂) nanoparticles provided by the present invention can be dispersed in non-polar solvents for a long time, and the copper indium sulfide semiconducting nanoparticle powder obtained with vacuum drying can be re-dispersed in non-polar solvents.

The following embodiments are used for illustrating the present invention, and shall not be considered as limitations to the present invention.

### EMBODIMENT 1: Preparation of CuInS₂ semiconducting nanoparticles

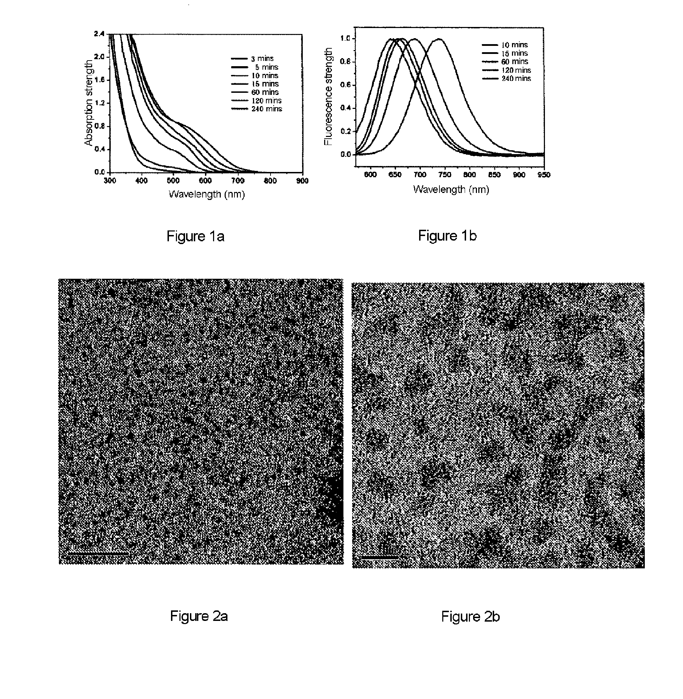

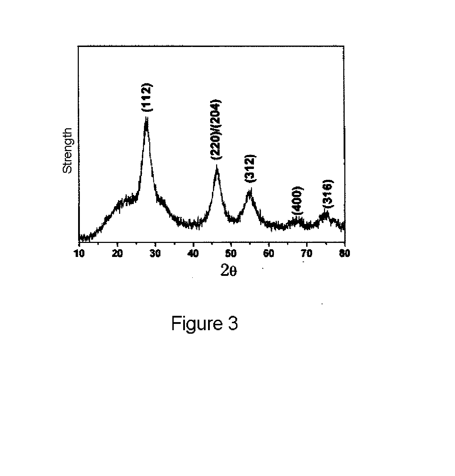

A mixture of copper (I) acetate, indium acetate, and dodecyl mercaptan and 50 ml of octadecene were added into a 100ml three-neck boiling flask, wherein the molar ratio of the copper (I) acetate, indium acetate, and dodecyl mercaptan was 1:1:10, and argon gas or nitrogen gas was introduced to flow therethrough for 30 minutes to expel air therein; after heating and stirring at 240°C, a clear pale-yellowish solution was obtained, and then the solution was continuously heated at a constant temperature of 240°C, the color of the colloidal solution gradually changing from pale yellow to dark red. The total reaction time of heating was 2 hours. The colloidal solution obtained from the above reaction was cooled down to room temperature, and 100 ml of acetone were added. Centrifugal sedimentation was carried out, the upper layer of the solution was removed and copper indium sulfide semiconducting nanoparticles were obtained. Different shapes and particle sizes of copper indium sulfide semiconducting nanoparticles could be obtained by changing the reaction time (the specific conditions being listed in Table 1). Tests of absorption spectrum and fluorescence spectrum revealed that the absorption spectrum and fluorescence spectrum of the CuInS₂ semiconducting nanoparticles were adjustable (the absorption spectrum and fluorescence spectrum being respectively illustrated in Figures 1a and 1b). The sediment was dissolved in toluene again, methanol which was three times the volume of the toluene was added, and then centrifugal sedimentation was carried out. This process was repeated three times, and finally the sediment was cleaned and vacuum dried to obtain the black powder of the copper indium sulfide nanoparticle, the yield being 90%. Tests of the sample powder obtained were executed with X-ray diffraction, and the results illustrated that the copper indium sulfide nanoparticles obtained all had a tetragonal crystal structure. Figure 3 shows an X-ray diffraction curve of copper indium sulfide nanoparticles obtained in a total reaction time of 2 hours.

**Table 1**

| | reaction temperature | total reaction time | shape | average particle size |
|---|---|---|---|---|
| Sample 1 | 240°C | 1 hr | sphere | 1.9nm |
| Sample 2 | 240°C | 2 hrs | sphere | 2.2nm |
| Sample 3 | 240°C | 3 hrs | sphere and rod | 2.8nm |
| Sample 4 | 240°C | 4 hrs | rod | 3.3nm |
| Sample 5 | 240°C | 6 hrs | sphere, triangle, and rod | 3-10nm |

### EMBODIMENT 2: Preparation of CuInS₂ semiconducting nanoparticles

A mixture of copper (II) acetate, indium acetate, and hexadecyl mercaptan and 25 ml of octadecene were added into a 100ml three-neck boiling flask, wherein the molar ratio of the copper (II) acetate, indium acetate, and hexadecyl mercaptan was 1:1:10, and argon gas or nitrogen gas was introduced to flow therethrough for 30 minutes to expel air therein; after heating and stirring at 270°C, a clear pale-yellowish solution was obtained, and then the solution was continuously heated at a constant temperature of 270°C, the total reaction time of heating being 20 minutes. The colloidal solution obtained was cooled down to room temperature, and 100 ml of acetone were added. The copper indium sulfide semiconducting nanoparticles with an average particle size of 3.3nm were obtained by centrifugal sedimentation.

### EMBODIMENT 3: Preparation of CuInS₂ semiconducting nanoparticles

A mixture of copper (II) acetate, indium acetate, and hexadecyl mercaptan and 50 ml of octadecene were added into a 250ml three-neck boiling flask, wherein the molar ratio of the copper (II) acetate, indium acetate, and hexadecyl mercaptan was 1:1:100, and argon gas or nitrogen gas was introduced to flow therethrough for 30 minutes to expel the air therein; after heating and stirring at 240°C, a clear pale-yellowish solution was obtained, and then the solution was continuously heated at a constant temperature of 240°C to obtain a black sol, the total reaction time of heating being 3 hours. The colloidal solution obtained was cooled down to room temperature, and 100 ml of acetone were added. The copper indium sulfide semiconducting nanoparticles with an average particle size of 3.5nm were obtained by centrifugal sedimentation.

### Embodiment 4: Preparation of CuInS₂ semiconducting nanoparticles

A mixture of copper (I) acetate, indium acetate, and dodecyl mercaptan and 50 ml of octadecene were added into a 50ml three-neck boiling flask, wherein the molar ratio of the copper (I) acetate, indium acetate, and dodecyl mercaptan was 1:1:10, and argon gas or nitrogen gas was introduced to flow therethrough for 30 minutes to expel the air therein; after heating and stirring at 240°C, a clear pale-yellowish solution was obtained, and then the solution was continuously heated at a constant temperature of 240°C, the total reaction time of heating being 2 hours. The colloidal solution obtained was cooled down to room temperature, and 100 ml of acetone were added. The copper indium sulfide semiconducting nanoparticles with an average particle size of 2.5nm were obtained by centrifugal sedimentation.

## Claims

1. A process for preparing copper indium sulfide semiconducting nanoparticles, **characterized in that** the process comprises the following steps:
(a) adding copper salt, indium salt, and alkanethiols into a non-polar organic solvent, then under an inert gas, heating and stirring, and dissolving until a dark red colloidal solution is obtained ; and
(b) cooling the colloidal solution obtained in step (a) down to room temperature, adding a polar solvent, and then carrying out centrifugal sedimentation to obtain copper indium sulfide semiconducting nanoparticles.

2. The process according to Claim **1, characterized in that** the copper indium sulfide semiconducting nanoparticles obtained are further subjected to cleaning and vacuum drying to obtain copper indium sulfide semiconducting nanoparticle powder.

3. The process according to Claim **2, characterized in that** said cleaning is carried out by dispersing the copper indium sulfide semiconducting nanoparticles obtained in a solvent of hexane, chloroform, or toluene, followed by adding methanol and proceeding with a centrifugal sedimentation process.

4. The process according to Claim **1, characterized in that** in step (a), the copper salt and indium salt have a molar ratio of 1-2:1-2, and the molar content of alkanethiols is in excess of the molar content of copper salt or indium salt.

5. The process according to Claim **1, characterized in that** the temperature for said heating and stirring in step (a) is 100-350°C, and the time is 10 minutes-30 hours.

6. The process according to Claim **1, characterized in that** said copper salt is copper (I) acetate, copper (II) acetate, copper (II) chloride, copper (I) chloride, copper (II) sulfate, or a mixture thereof.

7. The process according to Claim **1, characterized in that** said indium salt is indium acetate, indium chloride, indium sulfate, indium nitrate, or a mixture thereof.

8. The process according to Claim **1, characterized in that** said alkanethiol is mercaptan having one or more sulfhydryl functional groups, or a mixture of mercaptans having one or more sulfhydryl functional groups.

9. The process according to Claim **1, characterized in that** said non-polar organic solvent is octadecene, paraffin wax, diphenyl ether, dioctyl ether, octadecane or a solvent mixture thereof; and said polar solvent is methanol, ethanol, isopropanol, acetone, or a solvent mixture thereof.

10. A copper indium sulfide semiconducting nanoparticle, wherein said nanoparticles have a tetragonal crystal structure, the particle size is 2-10nm, and the emission spectrum is in the near infrared region of 600-800nm.
